# EUROPÄISCHE PATENTSCHRIFT

(11) **EP 0 995 085 B1**
(45) Veröffentlichungstag und Bekanntmachung des Hinweises auf die Patenterteilung: **18.09.2002**
(21) Anmeldenummer: 98941260.6
(22) Anmeldetag: 26.06.1998
(51) Int. Cl.: G01H 3/12

(54) **ULTRASCHALLMIKROSKOP**
ULTRASONIC MICROSCOPE
MICROSCOPE A ULTRASONS

(30) Priorität: 09.07.1997 DE 19729280
(43) Veröffentlichungstag der Anmeldung: 26.04.2000
(73) Patentinhaber: FRAUNHOFER-GESELLSCHAFT ZUR FÖRDERUNG DER ANGEWANDTEN FORSCHUNG E.V., 80636 München (DE)
(72) Erfinder: ARNOLD, Walter, D-66119 Saarbrücken (DE); KULIK, Andrzej, CH-1022 Chavannes (CH)
(74) Vertreter: RACKETTE Partnerschaft Patentanwälte
(86) Internationale Anmeldenummer: DE9801825
(87) Internationale Veröffentlichungsnummer: WO99002948

(56) Entgegenhaltungen:
- DE-A- 4 324 983
- US-A- 4 030 342
- US-A- 5 319 977
- SMITH ET AL.: "An Acoustic Microscope for Industrial Applications" IEEE TRANSACTIONS ON SONICS AND ULTRASONICS, Nr. 2, März 1985, Seiten 274-288, XP002091878

## Beschreibung

Die Erfindung betrifft ein Ultraschallmikroskop mit einem Ultraschallsender, mit dem in einen Probenkörper im Verhältnis zu Abmessungen des Probenkörpers auf einer Einkoppeloberfläche (6) in einem punktuellen Einkoppelbereich Ultraschallwellen einkoppelbar sind, mit einem auf der dem Ultraschallsender gegenüberliegenden Seite des Probenkörpers angeordneten Ultraschalldetektor, mit dem an einer der Einkoppeloberfläche gegenüberliegenden Detektionsoberfläche die in den Probenkörper eingekoppelten Ultraschallwellen detektierbar sind und der relativ zu dem Probenkörper positionierbar ist, und mit einer Zentraleinheit, mit der bei einer Abfolge von Stellungen des Ultraschalldetektors relativ zu dem Probenkörper den Amplituden der eingekoppelten Ultraschallwellen sowie den Amplituden der mit dem Ultraschalldetektor erfaßten Ultraschallwellen zugeordnete Meßdaten speicherbar und verarbeitbar sind.

Ein derartiges Ultraschallmikroskop ist aus der US-A-4,030,342 bekannt. Bei dem vorbekannten Ultraschallmikroskop ist ein Ultraschallsender vorgesehen, mit dem in einen Probenkörper im Verhältnis zu Abmessungen des Probenkörpers auf einer Einkoppeloberfläche in einem punktuellen Einkoppelbereich Ultraschallwellen einkoppelbar sind. Weiterhin verfügt das gattungsgemäße Ultraschallmikroskop über einen auf der dem Ultraschallsender gegenüberliegenden Seite des Probenkörpers angeordneten Ultraschalldetektor, mit dem an einer der Einkoppeloberfläche gegenüberliegenden Detektionsoberfläche die in den Probenkörper eingekoppelten Ultraschallwellen detektierbar sind. Der Ultraschalldetektor verfügt über eine akustische Linse, die bei einer Relätivpositionierung zu dem Probenkörper so angeordnet ist, daß ihr Brennpunkt jederzeit mit dem Einkoppelbereich zusammenfällt.

Weiterhin ist bei dem gattungsgemäßen Ultraschallmikroskop eine Zentraleinheit vorgesehen, mit der bei einer Abfolge von Stellungen des Ultraschalldetektors relativ zu dem Probenkörper den Amplituden der eingekoppelten Ultraschallwellen sowie den Amplituden der mit dem Ultraschalldetektor erfaßten Ultraschallwellen zugeordnete Meßdaten speicherbar und verarbeitbar sind. Somit sind bei dem gattungsgemäßen Ultraschallmikroskop unter Ausnutzung des Effekts einer erheblichen Vergrößerung bei einer Relativdrehung des Probenkörpers in Bezug auf den Ultraschallsender beziehungsweise den Ultraschalldetektor bei Beibehaltung des Zusammenfallens des Einkoppelbereichs und des Fokalbereichs vergrößerte dreidimensionale Bilder der Oberfläche auch von verhältnismäßig kleinen Probenkörpern generierbar. Allerdings gestattet die gattungsgemäße Vorrichtung lediglich eine Abbildung des Einkoppelbereichs beziehungsweise Fokalbereichs.

Aus der US-A-5,319,977 ist ein Ultraschallmikroskop bekannt, das als Ultraschallsender über ein atomares Kraftmikroskop verfügt, mit dem auf einer Einkoppeloberfläche in einem im Verhältnis zu den Abmessungen des Probenkörpers in einem punktuellen Einkoppelbereich divergente Ultraschallwellen einkoppelbar sind. Als Ultraschalldetektor verfügt dieses Ultraschallmikroskop über einen auf einer der Einkoppeloberfläche gegenüberliegenden Detektionsoberfläche angeordneten, als dünner piezoelektrischer Film ausgebildeten Flächenwandler, mit dem die durch den Probenkörper durchgelaufenen Ultraschallwellen großflächig detektierbar sind. Bei dieser Vorrichtung sind über eine Spektralanalyse der verhältnismäßig großflächig detektierten transmittierten Ultraschallwellen Eigenschaften des Probenkörpers im punktuellen Einkoppelbereich erfaßbar.

Aus der DE 43 24 983 A1 ist eine Vorrichtung bekannt, bei der ein Ultraschallsender vorgesehen ist, mit der ein Probenkörper in jseiner Gesamtheit mit Ultraschallwellen durchschallbar ist. Weiterhin verfügt diese Vorrichtung über einen ortsaufgelöst messenden Ultraschalldetektor in Gestalt eines atomaren Kraftmikroskopes, mittels dem an einer Detektionsoberfläche des Probenkörpers auftretende ultraschallinduzierte Deformationen über Auslenkungen einer Empfangsspitze des Kraftmikroskopes erfaßbar sind. Dadurch sind bei sehr hohem örtlichen Auflösungsvermögen Elastizitätseigenschaften des Probenkörpers meßbar. Allerdings weist diese Vorrichtung den Nachteil auf, daß allenfalls über den Durchtrittsbereich der Ultraschallwellen gemittelte Meßwerte erfaßbar sind.

Der Erfindung liegt die Aufgabe zugrunde, ein Ultraschallmikroskop der eingangs genannten Art zu schaffen, mit der auch Informationen über räumlich begrenzte Bereiche im Inneren eines Probenkörpers gewinnbar sind.

Diese Aufgabe wird bei einem Ultraschallmikroskop der eingangs genannten Art dadurch gelöst, daß der Ultraschalldetektor von der Einkoppeloberfläche des Probenkörpers in einem Abstand positionierbar ist, der im Nahfeld der sich von dem punktuellen Einkoppelbereich ausbreitenden Ultraschallwellen liegt, daß der Ultraschallsender bezüglich der Einkoppeloberfläche an einer Anzahl von Sendepositionen und der Ultraschalldetektor bezüglich der Detektionsoberfläche für jede Sendeposition an mehreren Empfangspositionen unabhängig voneinander positionierbar sind und daß eine Rekonstruktionseinheit vorgesehen ist, mit der aus den an mehreren Sendepositionen von dem Ultraschallsender ausgesendeten und an mehreren Empfangspositionen in bezug auf jede Sendeposition von dem Ultraschalldetektor erfaßten Ultraschallamplituden wenigstens ein Bild innenliegender Bereiche des Probenkörpers erzeugbar ist.

Bei dem erfindungsgemäßen Ultraschallmikroskop ist durch die Positionierung des Ultraschalldetektors in einem Abstand von der Einkoppeloberfläche, bei dem die Intensitätsverteilung an der Detektionsoberfläche im wesentlichen unabhängig von der Wellenlänge der eingekoppelten Ultraschallwellen als Bestimmungsgröße ist, eine Erfassung der transmittierten Ultraschallwellen beispielsweise im Nahfeld des Ultraschallsenders geschaffen, die bei der Positionierung des Ultraschallsenders an mehreren Sendepositionen und der Positionierung des Ultraschalldetektors für jede Sendeposition an mehreren Empfangspositionen mittels einer entsprechend dazu eingerichteten Rekonstruktionseinheit wenigstens ein Bild innenliegender Bereiche des Probenkörpers beispielsweise auf der Grundlage von bekannten tomographischen, bildgebenden Verfahren bei einer hohen, im wesentlichen durch die Größe des Einkoppelbereichs bestimmten Auflösung erzeugbar ist.

In einer bevorzugten Ausgestaltung weist der Ultraschalldetektor ein Kraftmikroskop mit einer Auflösung vorzugsweise im atomaren Bereich bis einigen 10 Nanometern auf. In einer weiteren Ausgestaltung verfügt der Ultraschalldetektor über ein Tunnelmikroskop mit einer Auflösung vorzugsweise im atomaren Bereich bis einigen 10 Nanometern.

Bei dem Einsatz eines Kraftmikroskopes ist es zweckmäßig, eine optisch oder kapazitiv arbeitende Detektionseinheit zum Erfassen der Auslenkungen einer Empfangsspitze des Kraftmikroskopes vorzusehen.

In verschiedenen Ausgestaltungen sind als Ultraschallsender eine mit einem Ultraschallwandler gekoppelte, fokussierende Ultraschallinse, eine mit einem Ultraschallwandler gekoppeltes Kraftmikroskop oder eine eine Anregungslichtquelle, einen Modulator und eine Fokussieroptik aufweisende optische Einheit zum Erzeugen von Ultraschallwellen auf der Grundlage des thermoelastischen Effektes vorgesehen.

Zum Erzeugen eines dreidimensionalen Bildes des Probenkörpers ist vorgesehen, daß der Ultraschallsender über die ankoppelseitige Oberfläche des Probenkörpers an einer Vielzahl von Sendepositionen in einem dem örtlichen Auflösungsvermögen des Ultraschallsenders entsprechenden Raster und der Ultraschalldetektor an jeder Sendeposition des Ultraschallsenders an mehreren Empfangspositionen an einer der ankoppelseitigen Oberfläche gegenüberliegenden Detektionsoberfläche ebenfalls ihrem örtlichen Auflösungsvermögen entsprechenden Raster über eine detektionsseitige Oberfläche des Probenkörpers in einem Bereich positioniert wird, in dem ultraschallinduzierte Deformationen der Detektionsoberfläche erfaßbar sind. Auf diese Weise sind Daten gewinnbar, aus denen ein vollständiges dreidimensionales Bild des Probenkörpers oder Bilder beliebiger Schnitte rekonstruierbar sind.

Selbstverständlich ist es auch zweckmäßig, eine Probenkörperverschiebevorrichtung vorzusehen, mit der der Probenkörper relativ zu dem Ultraschallsender verschiebbar ist, so daß eine Durchschallung an weiteren Sendepositionen durchführbar ist.

Weitere zweckmäßige Ausgestaltungen der Erfindung sind Gegenstand der Unteransprüche sowie der nachfolgenden Beschreibung von Ausführungsbeispielen unter Bezug auf die Figuren der Zeichnung. Es zeigen:
- Fig. 1: in einem Blockschaltbild ein Ausführungsbeispiel eines Ultraschallmikroskops mit einer Ultraschallinse zur punktuellen Einkopplung von Ultraschallwellen,
- Fig. 2: in einem Blockschaltbild ein weiteres Ausführungsbeispiel eines Ultraschallmikroskops mit einem atomaren Kraftmikroskop zur punktuellen Einkopplung von Ultraschallwellen,
- Fig. 3: in einem Blockschaltbild ein weiteres Ausführungsbeispiel eines Ultraschallmikroskops mit einem gegenüber dem Ausführungsbeispiel gemäß Fig. 2 abgewandelten Kraftmikroskop,
- Fig. 4: in einem Blockschaltbild ein weiteres Ausführungsbeispiel eines Ultraschallmikroskops mit einer optischen Einrichtung zum punktuellen Erzeugen von Ultraschallwellen und
- Fig. 5: in einem Blockschaltbild ein Ausführungsbeispiel einer Zentraleinheit eines Ultraschallmikroskops.

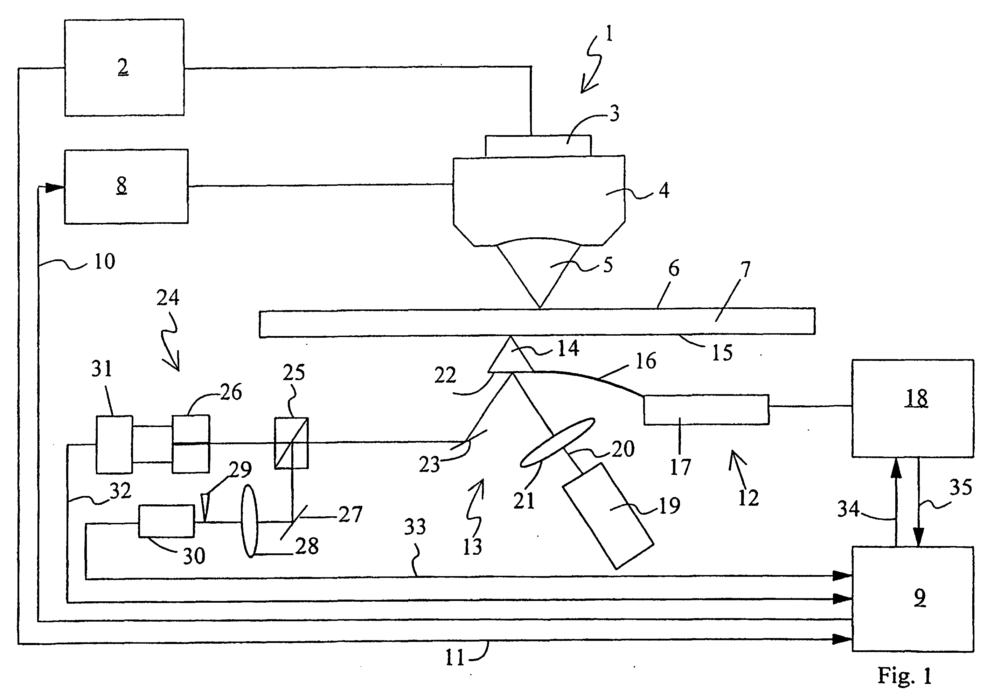

Fig. 1 zeigt in einem Blockschaltbild ein Ausführungsbeispiel eines Ultraschallmikroskops. Das Ultraschallmikroskop gemäß Fig. 1 verfügt über einen Ultraschallsender 1, der einen an einen Hochfrequenzgenerator 2 angeschlossenen Ultraschallwandler 3 aufweist. Der Ultraschallwandler 3 ist mit einer Ultraschallinse 4 gekoppelt, mit der ein Ultraschallstrahl 5 auf eine Einkoppeloberfläche 6 eines Probenkörpers 7 fokussierbar ist. Der Durchmesser des Brennfleckes der Ultraschallinse 4 liegt typischerweise im Bereich von einigen Mikrometern bis wenigen 10 Mikrometern und hat damit im Vergleich zu der Größe von typischen makroskopischen Probenkörpern 7 eine punktuelle Größe. Der Ultraschallwandler 3 sowie die Ultraschallinse 4 sind mechanisch mit einer Sendeverschiebeeinheit 8 verbunden, mit der ein emittierter Ultraschallstrahl 5 an einer Anzahl von Sendepositionen auf der Einkoppeloberfläche 6 positionierbar ist.

Das Ultraschallmikroskop gemäß Fig. 1 verfügt über eine Zentraleinheit 9, mit der über eine Sendepositionierleitung 10 die Sendeverschiebeeinheit 8 zum definierten Positionieren des Ultraschallstrahles 5 ansteuerbar ist. Der Zentraleinheit 9 sind als Meßdaten über eine Sendeamplitudenleitung 11 der Amplitude des Ultraschallstrahles 5 entsprechende Ultraschallamplitudenwerte einspeisbar.

Weiterhin weist das Ultraschallmikroskop gemäß Fig. 1 ein vorzugsweise im Nahfeld, das heißt im wesentlichen aperturbegrenzt arbeitendes Empfangskraftmikroskop 12 eines Ultraschalldetektors 13 auf. Das Empfangskraftmikroskop 12 verfügt über eine Empfangsspitze 14, die bei einer Ortsauflösung von vorzugsweise höchstens im Bereich von typischerweise einigen 10 Nanometern, besonders bevorzugt mit atomarer Auflösung in einem Abstand von einer der Einkoppeloberfläche 6 des Probenkörpers 7 gegenüberliegenden Detektionsoberfläche 15, wobei bei diesem Abstand die Größe der Wellenlänge der eingekoppelten Ultraschallwellen für die Intensitätsverteilung an der Detektionsoberfläche 15 noch keine maßgebliche Rolle spielt, erfindugsgemäß im Nahfeld der sich von dem punktuellen Einkoppelbereich ausbreitenden Ultraschallwellen positionierbar ist. Die Empfangsspitze 14 ist an einem Ende einer beispielsweise als Blattfeder ausgestalteten Empfangsfeder 16 befestigt, deren anderes Ende an einer Empfangsfederaufhängung 17 angebracht ist. Die Empfangsfederaufhängung 17 ist mechanisch mit einer Empfangsverschiebeeinheit 18 verbunden, mit der die Empfangspitze 14 bei jeder Sendeposition an mehreren Empfangspositionen über der Detektionsoberfläche 15 positionierbar ist.

Weiterhin verfügt der Ultraschalldetektor 13 gemäß Fig. 1 über eine beispielsweise als Laser ausgebildete Abtastlichtquelle 19, deren emittierte Abtaststrahlung 20 über eine Abtastfokussieroptik 21 auf eine wenigstens teilweise reflektive Abtastseite 22 der Empfangsspitze 14 oder der Empfangsfeder 16 fokussierbar ist. Der von der Abtastseite 22 rückgeworfene Teil der Abtaststrahlung 20 ist mit einer Abtastablenkeinheit 23 einer optischen Detektionseinheit 24 zuführbar. Die optische Detektionseinheit 24 verfügt über einen Strahlteiler 25, mit dem der der optischen Detektionseinheit 24 beaufschlagende Teil der Abtaststrahlung 20 einem Segmentdetektor 26 und über eine Umlenkeinheit 27 sowie eine fokussierende Detektionsoptik 28 unter Passieren eines im Fokalbereich der Detektionsoptik 28 angeordneten Teilabschattungselementes 29 einem Abschattungsdetektor 30 zuführbar ist.

Der aus zwei aneinandergrenzenden Detektionsflächen aufgebaute Segmentdetektor 26 weist eine verhältnismäßig geringe Bandbreite auf, die kleiner als die Frequenz der in den Probenkörper 7 eingekoppelten Ultraschallwellen ist. Die jeweils einer Detektionsfläche zugeordneten Ausgänge des Segmentdetektors 26 sind an einen Normierverstärker 31 angeschlossen, der die Differenz zwischen den Photospannungen der Detektionsflächen des Segmentdetektors 26 auf deren Summenwert normiert und verstärkt. Mit dem Segmentdetektor 26 sind somit gegenüber ultraschallinduzierten hochfrequenten Auslenkungen der Empfangsspitze 14 langsamere, insbesondere durch die Topographie der Detektionsoberfläche 15 bedingte niederfrequente Ablenkungen der Empfangsspitze 14 detektierbar.

Der mit einer einzigen Detektionsfläche ausgestattete Abschattungsdetektor 30 weist eine Bandbreite auf, die wenigstens der Frequenz der in den Probenkörper 7 eingekoppelten Ultraschallwellen 5 entspricht. Mit dem Abschattungsdetektor 30 sind die ultraschallinduzierten hochfrequenten Auslenkungen der Empfangsspitze 14 detektierbar, die sich in einer durch das Teilabschattungselement 29 induzierten, alternierenden, den Abschattungsdetektor 30 beaufschlagenden Teilintensität der Abtaststrahlung 20 niederschlagen.

Die Ausgangssignale des Normierverstärkers 31 sind über eine Niederfrequenzsignalleitung 32 und die Ausgangssignale des Abschattungsdetektors 30 sind über eine Hochfrequenzsignalleitung 33 der Zentraleinheit 9 einspeisbar. Weiterhin ist mit der Zentraleinheit 9 über eine Ansteuerleitung 34 die Empfangsverschiebeeinheit 18 ansteuerbar, wobei der Empfangsposition der Empfangsspitze 14 zugeordnete Empfangspositionssignale über eine Empfangspositionsleitung 35 von der Empfangsverschiebeeinheit 18 auf die Zentraleinheit 9 übermittelbar sind.

Mit dem Ultraschallmikroskop gemäß Fig. 1 sind vorzugsweise bei ruhendem Probenkörper 7 der Ultraschallstrahl 5 sowie die Empfangsspitze 14 relativ zueinander positionierbar. Bei einem bevorzugten Meßverfahren wird an jeder Position des Ultraschallstrahles 5 die Empfangsspitze 14 wenigstens über den Bereich der Detektionsoberfläche 15 positioniert, in dem eine ultraschallinduzierte hochfrequente Auslenkung der Empfangsspitze 14 detektierbar ist. Mit der Zentraleinheit 9 sind als Meßdaten die der eingekoppelten Ultraschallamplitude entsprechenden Ausgangssignale des Hochfrequenzgenerators 2 sowie die den Amplituden der Ablenkungen und den hochfrequenten Auslenkungen entsprechenden Intensitätssignale des Abschattungsdetektors 30 und des Normierverstärkers 31 in Abhängigkeit jeder Sendeposition des Ultraschallstrahles 5 sowie den dieser Sendeposition zugeordneten Empfangspositionen der Empfangsspitze 14 abspeicherbar.

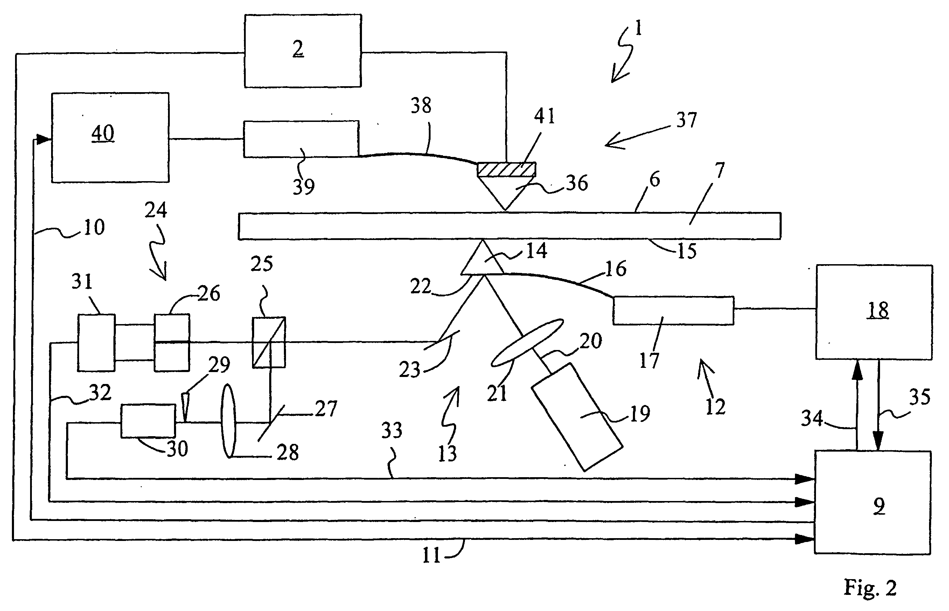

Fig. 2 zeigt in einem Blockschaltbild ein weiteres Ausführungsbeispiel eines Ultraschallmikroskops, das in Abwandlung gegenüber dem beispielhaften Ultraschallmikroskop gemäß Fig. 1 zur Einkopplung von Ultraschallwellen in den Probenkörper 7 über ein eine Sendespitze 36 aufweisendes Sendekraftmikroskop 37 mit hohem örtlichen Auflösungsvermögen von typischerweise einigen 10 Nanometern verfügt. Die Sendespitze 36 ist an einem Ende einer als Blattfeder ausgestalteten Sendefeder 38 angebracht, deren anderes Ende an einer Sendefederaufhängung 39 befestigt ist. Die Sendefederaufhängung 39 ist mechanisch mit einer Sendeverschiebeeinheit 40 verbunden, mit der die Sendespitze 36 über der Einkoppeloberfläche 6 des Probenkörpers 7 positionierbar ist. An der Sendespitze 36 ist ein vorzugsweise piezoelektrisch ausgeführter Ultraschallwandler 41 angebracht, der an den Hochfrequenzgenerator 2 des Ultraschallsenders 1 angeschlossen ist. Bei Beaufschlagen des Ultraschallwandlers 41 mit einer mit dem Hochfrequenzgenerator 2 erzeugbaren Hochfrequenz sind über die Sendespitze 36 im Verhältnis zu den Abmessungen des Probenkörpers 7 punktuell Ultraschallwellen in den Probenkörper 7 einkoppelbar.

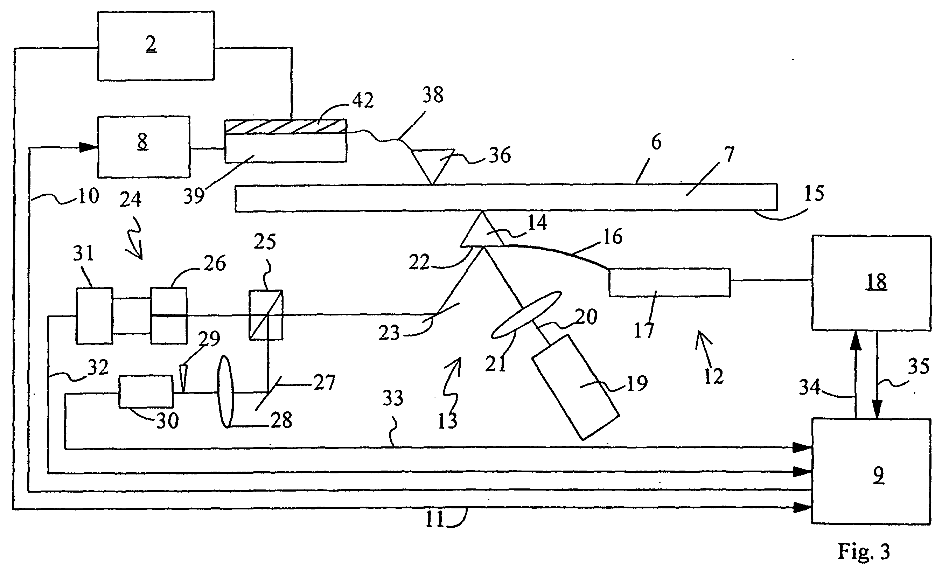

Fig. 3 zeigt ein weiteres Ausführungsbeispiel eines Ultraschallmikroskops, bei dem in Abwandlung zu dem Ausführungsbeispiel gemäß Fig. 2 ein Ultraschallwandler 42 mit der Sendefederaufhängung 39 gekoppelt ist. Bei Beaufschlagen der Sendefederaufhängung 39 mit durch den an den Ultraschallwandler 42 angeschlossenen Hochfrequenzgenerator 2 und den Ultraschallwandler 42 erzeugten Ultraschallwellen wird die Sendefeder 38 in hochfrequente Schwingung versetzt, so daß die Sendespitze 36 in den Probenkörper 7 punktuell Ultraschallwellen induziert.

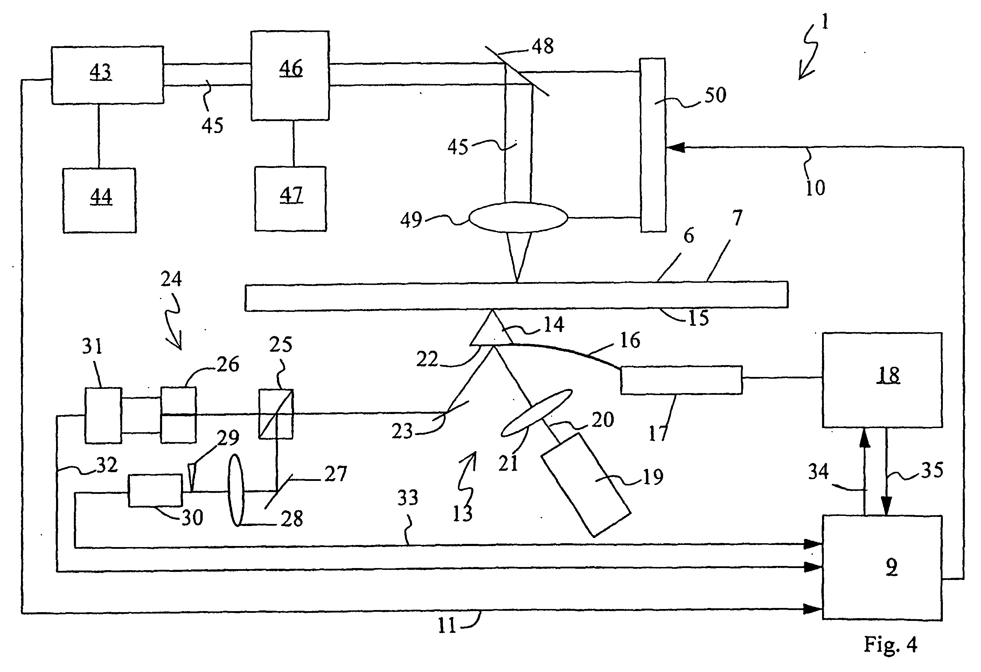

Fig. 4 zeigt ein weiteres Ausführungsbeispiel eines Ultraschallmikroskops, wobei sich in den Ausführungsbeispielen gemäß Fig. 1 bis Fig. 3 entsprechende Bauelemente mit den gleichen Bezugszeichen versehen und im weiteren nicht näher erläutert sind. Der Ultraschallsender 1 bei dem Ultraschallmikroskop gemäß Fig. 4 verfügt über eine bevorzugt als Laser ausgebildete Anregungslichtquelle 43, mit der durch eine Energieversorgungseinheit 44 angesteuert ein in dem Ausführungsbeispiel gemäß Fig. 4 im wesentlichen paralleler Anregungslichtstrahl 45 emittierbar ist. Der Anregungslichtquelle 43 ist ein Anregungslichtmodulator 46 nachgeordnet, mit dem die Intensität eines ihn beaufschlagenden Anregungslichtstrahles 45 von einer Modulatoransteuereinheit 47 gesteuert hochfrequent modulierbar ist.

Weiterhin verfügt der Ultraschallsender 1 gemäß Fig. 4 über eine Anregungslichtumlenkoptik 48 und eine beugungsbegrenzt arbeitende Anregungslichtfokussieroptik 49, mit der das intensitätsmodulierte Anregungslicht 45 auf die Einkoppeloberfläche 6 des Probenkörpers 7 fokussierbar ist, wobei auf der Grundlage des thermoelastischen Effektes in einem gegenüber den Abmessungen des Probenkörpers 7 sehr kleinen Bereich punktuell Ultraschallwellen erzeugbar sind.

Die Anregungslichtumlenkoptik 48 und die Anregungslichtfokussieroptik 49 sind mechanisch mit einer Sendeverschiebeeinheit 50 verbunden, mit der der Fokalbereich des Anregungslichtstrahles 45 über die Einkoppeloberfläche 6 des Probenkörpers 7 führbar ist. Die Sendeverschiebeeinheit 50 ist zur Steuerung an die Zentraleinheit 9 angeschlossen.

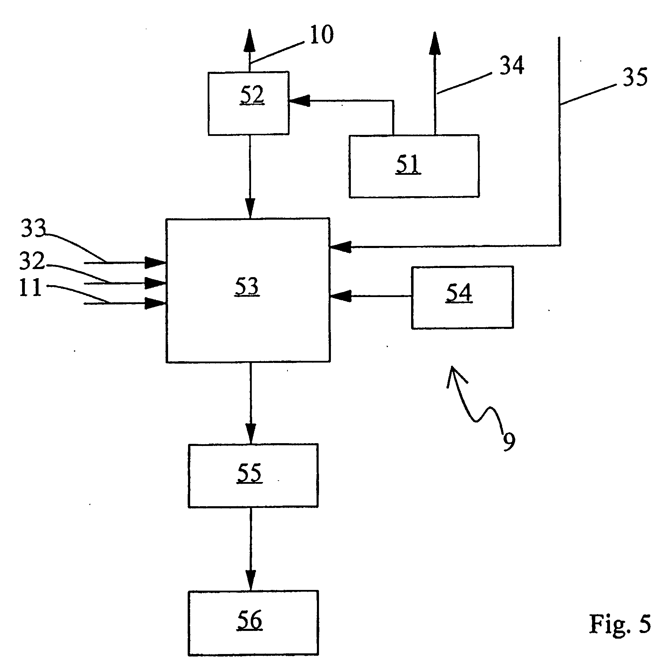

Fig. 5 zeigt in einem Blockschaltbild ein Ausführungsbeispiel der Zentraleinheit 9 gemäß den anhand Fig. 1 bis Fig. 4 erläuterten beispielhaften Ultraschallmikroskops. Die Zentraleinheit 9 verfügt über einen Taktgeber 51, an den ein Sendepositionsansteuerglied 52 angeschlossen ist. Mit dem Sendepositionsansteuerglied 52 ist durch Beaufschlagen mit entsprechenden Steuersignalen über die Sendepositionierleitung 10 auf die jeweilige Sendeverschiebeeinheit 8, 40, 50 der Ultraschallstrahl 5, die Sendespitze 36 beziehungsweise der Fokalbereich des Anregungslichtstrahles 45 an mehreren Sendepositionen bezüglich der Einkoppeloberfläche 6 definiert positionierbar. Weiterhin steht der Taktgeber 51 über die Ansteuerleitung 34 mit der Empfangsverschiebeeinheit 18 in Verbindung, wobei an jeder Sendeposition des Ultraschallstrahles 5, der Sendespitze 36 beziehungsweise des fokussierten Anregungslichtstrahles 45 die Empfangsspitze 14 an mehreren Empfangspositionen zum Detektieren der ultraschallinduzierten hochfrequenten Auslenkungen und der topographisch bedingten niederfrequenten Ablenkungen an der der Einkoppeloberfläche 6 gegenüberliegenden Detektionsoberfläche 15 positioniert wird.

Der Position des Ultraschallstrahles 5, der Sendespitze 36 beziehungsweise des Fokalbereiches des fokussierten Anregungslichtstrahles 45 zugeordnete Sendepositionssignale aus der Sendepositionieransteuereinheit 52 sowie der Empfangsposition der Empfangsspitze 14 zugeordnete Detektionspositionssignale aus der Empfangsverschiebeeinheit 18 sind einem Datenspeicher 53 zusammen mit den Amplituden der eingekoppelten Ultraschallwellen zugeordneten Amplitudensignalen in der Sendeamplitudenleitung 11 sowie den Intensitätssignalen in der Niederfrequenzleitung 32 und der Hochfrequenzleitung 33 einspeisbar. Weiterhin ist dem Datenspeicher 53 ein Referenzortsignal aus einem Referenzortgeber 54 einspeisbar, das als Bezugssignal zur Umrechnung in absolute Ortskoordinaten dient.

Nach Abschluß eines Meßzyklus mit der Relativpositionierung der Empfangsspitze 14 in bezug auf die die Ultraschallwellen erzeugende Ultraschallinse 4, die Sendespitze 36 beziehungsweise die den Anregungslichtstrahl 45 fokussierende Anregungslichtfokussieroptik 49 sind mit einer dem Datenspeicher 53 nachgeordneten Rekonstruktionseinheit 55 die Meßdaten auf der Grundlage bildgebender tomografischer Algorithmen zu einem ortsaufgelösten Intensitätsbild wenigstens einer innenliegenden Schicht des Probenkörpers 7 verknüpfbar.

Dabei ist mit dem jeweiligen tomografischen Algorithmus der Sachverhalt ausnutzbar, daß mit der im Nahfeld arbeitenden Empfangsspitze 14 im wesentlichen an jeder Relativposition die Dämpfung der an der Einkoppeloberfläche 6 in den Probenkörper 7 eingekoppelten Ultraschallwellen erfaßbar sind und bei Versetzen des Ultraschallstrahles 5, der Sendespitze 36 beziehungsweise des Fokalbereiches des Anregungslichtstrahles 45 sowie repetitiver Positionierung der Sendespitze 14 an jeder dieser Sendepositionen durch entsprechende Verknüpfung der in den Datenspeicher 53 abgespeicherten Orts- und Intensitätsdaten wenigstens eine vorbestimmte Schicht mit einer dem durch die Größe des punktuellen Einkoppelbereiches und das örtliche Auflösungsvermögen des Ultraschalldetektors 13 bestimmten Gesamtauflösungsvermögen entsprechenden Schärfe rekonstruierbar ist. Bei Rekonstruktion einer großen Anzahl von Schichten bis maximal einer dem gesamten Auflösungsvermögen entsprechenden Genauigkeit ist auch ein dreidimensionales Bild der inneren Struktur des Probenkörpers 7 rekonstruierbar.

Bei dem in Fig. 5 dargestellten Ausführungsbeispiel sind die mittels der Rekonstruktionseinheit 55 aufgearbeiteten Daten in einer Ausgabeeinheit 56 als Schichtbilder oder dreidimensionale Darstellungen ausgebbar.

## Patentansprüche

1. Ultraschallmikroskop mit einem Ultraschallsender (1), mit dem in einen Probenkörper (7) im Verhältnis zu Abmessungen des Probenkörpers (7) auf einer Einkoppeloberfläche (6) in einem punktuellen Einkoppelbereich Ultraschallwellen einkoppelbar sind, mit einem auf der dem Ultraschallsender (1) gegenüberliegenden Seite des Probenkörpers (7) angeordneten Ultraschalldetektor (13), mit dem an einer der Einkoppeloberfläche (6) gegenüberliegenden Detektionsoberfläche (15) die in den Probenkörper (7) eingekoppelten Ultraschallwellen detektierbar sind und der relativ zu dem Probenkörper (7) positionierbar ist, und mit einer Zentraleinheit (9), mit der bei einer Abfolge von Stellungen des Ultraschalldetektors (13) relativ zu dem Probenkörper (7) den Amplituden der eingekoppelten Ultraschallwellen sowie den Amplituden der mit dem Ultraschalldetektor (13) erfaßten Ultraschallwellen zugeordnete Meßdaten speicherbar und verarbeitbar sind, **dadurch gekennzeichnet, daß** der Ultraschalldetektor (13) von der Einkoppeloberfläche (6) des Probenkörpers (7) in einem Abstand positionierbar ist, der im Nahfeld der sich von dem punktuellen Einkoppelbereich (6) ausbreitenden Ultraschallwellen liegt, **daß** der Ultraschallsender (1) bezüglich der Einkoppeloberfläche (6) an einer Anzahl von Sendepositionen und der Ultraschalldetektor (13) bezüglich der Detektionsoberfläche (15) für jede Sendeposition an mehreren Empfangspositionen unabhängig voneinander positionierbar sind und **daß** eine Rekonstruktionseinheit (55) vorgesehen ist, mit der aus den an mehreren Sendepositionen von dem Ultraschallsender (1) ausgesendeten und an mehreren Empfangspositionen in bezug auf jede Sendeposition von dem Ultraschalldetektor (13) erfaßten Ultraschallamplituden wenigstens ein Bild innenliegender Bereiche des Probenkörpers (7) erzeugbar ist.

2. Ultraschallmikroskop nach Anspruch 1, **dadurch gekennzeichnet, daß** der Ultraschalldetektor (13) ein Tunnelmikroskop mit atomarem Auflösungsvermögen aufweist.

3. Ultraschallmikroskop nach Anspruch 1, **dadurch gekennzeichnet, daß** der Ultraschalldetektor (13) ein atomares Kraftmikroskop (12) mit atomarem Auflösungsvermögen aufweist.

4. Ultraschallmikroskop nach Anspruch 3, **dadurch gekennzeichnet, daß** zur Detektion der Auslenkungen einer Empfangsspitze (14) des Kraftmikroskopes (12) eine optische Detektionseinheit (19, 21, 26, 28, 29, 30) vorgesehen ist.

5. Ultraschallmikroskop nach einem der Ansprüche 1 bis 4, **dadurch gekennzeichnet, daß** der Ultraschallsender (1) einen Ultraschallwandler (3) mit nachgeordneter fokussierender Ultraschallinse (4) aufweist.

6. Ultraschallmikroskop nach einem der Ansprüche 1 bis 4, **dadurch gekennzeichnet, daß** der Ultraschallsender (1) ein mit einem Ultraschallwandler (41, 42) gekoppeltes Kraftmikroskop (37) aufweist.

7. Ultraschallmikroskop nach einem der Ansprüche 1 bis 4, **dadurch gekennzeichnet, daß** der Ultraschallsender (1) eine Lichtquelle (43), einen Modulator (46) sowie eine Fokussieroptik (49) aufweist, mit denen ein intensitätsmodulierter Lichtstrahl (45) auf den Probenkörper (7) fokussierbar ist.

8. Ultraschallmikroskop nach einem der Ansprüche 1 bis 7, **dadurch gekennzeichnet, daß** mit der Rekonstruktionseinheit (55) das oder jedes Bild mit einem tomographischen Algorithmus rekonstruierbar ist, mittels dem die in einem Datenspeicher (43) der Zentraleinheit (9) abgespeicherten Daten so miteinander verknüpfbar sind, **daß** in einer Schicht liegende Bildpunkte scharf rekonstruierbar sind.

9. Ultraschallmikroskop nach einem der Ansprüche 1 bis 8, **dadurch gekennzeichnet, daß** eine Probenkörperverschiebevorrichtung vorgesehen ist, mit der ein Probenkörper (7) relativ zu dem Ultraschallsender (1) verschiebbar ist.

## Claims

1. Ultrasonic microscope comprising an ultrasonic transmitter (1) by which ultrasonic sound waves can be input into a target object (7) on an input surface (6) within a point-by-point input range, in proportion to dimensions of the target object (7), an ultrasonic detector (13) arranged on the side of the target object (7) that is situated opposite the ultrasonic transmitter and by which the ultrasonic sound waves input into the target object (7) can be detected on a detection surface (15) situated opposite the input surface (6), and which detector (13) can be positioned relative to the target object (7), and comprising a central unit (9) by which, given a succession of positions of the ultrasonic detector (13) relative to the target object (7), measurement data associated with the amplitudes of the input ultrasonic sound waves and with the amplitudes of the ultrasonic sound waves recorded by the ultrasonic detector (13) can be stored and processed, **characterised in that** the ultrasonic detector (13) can be positioned at a distance from the input surface (6) of the target object (7) **that** is situated in the near field of the ultrasonic sound waves being propagated from the point-by-point input range (6), that the ultrasonic transmitter (1) can be independently positioned at a number of transmitting locations with respect to the input range (6) and for each transmitting location the ultrasonic detector (13) can be independently positioned at a plurality of receiving locations with respect to the detection surface (15), and **that** a reconstruction unit (15) is provided by which at least one image of inner zones of the target object (7) can be generated from the ultrasonic amplitudes transmitted by the ultrasonic transmitter (1) at a plurality of transmitting locations and recorded by the ultrasonic detector (13) at a plurality of receiving locations in relation to each transmitting location.

2. Ultrasonic microscope according to claim 1, **characterised in that** the ultrasonic detector (13) incorporates a tunnelling microscope with atomic resolution.

3. Ultrasonic microscope according to claim 1, **characterised in that** the ultrasonic detector (13) incorporates an atomic force microscope (12) with atomic resolution.

4. Ultrasonic microscope according to claim 3, **characterised in that** an optical detection unit (19, 21, 26, 28, 29, 30) is provided for the detection of the excursions made by a receiver peak (14) of the force microscope (12).

5. Ultrasonic microscope according to any of claims 1 to 4, **characterised in that** the ultrasonic transmitter (1) incorporates an ultrasonic transducer (3) with a downstream focusing ultrasonic lens (4).

6. Ultrasonic microscope according to any of claims 1 to 4, **characterised in that** the ultrasonic transmitter (1) incorporates a force microscope (37) coupled to an ultrasonic transducer (41, 42).

7. Ultrasonic microscope according to any of claims 1 to 4, **characterised in that** the ultrasonic transmitter (1) incorporates a light source (43), a modulator (46) and a focusing lens system (49), which enable an intensity-modulated light beam (45) to be focused onto the target object (7).

8. Ultrasonic microscope according to any of claims 1 to 7, **characterised in that** the reconstruction unit (55) enables the or each image to be reconstructed using a tomographic algorithm by means of which the data stored in a data store (43) of the central unit (9) can be combined with one another in such a way **that** image dots lying in a layer can be reconstructed sharply.

9. Ultrasonic microscope according to any of claims 1 to 8, **characterised in that** a target object displacing device is provided which enables a target object (7) to be displaced in relation to the ultrasonic transmitter (1).

## Revendications

1. Microscope à ultrasons comprenant un émetteur d'ultrasons (1) permettant d'injecter des ondes ultrasonores dans un tube à échantillon (7) en fonction des dimensions du tube à échantillon (7) sur une surface d'injection (6) dans une zone d'injection ponctuelle, comprenant également un détecteur d'ultrasons (13) disposé sur la face du tube à échantillon (7) opposée à l'émetteur d'ultrasons (1), permettant de détecter les ondes ultrasonores injectées dans le tube à échantillon (7) au niveau d'une surface de détection (15) opposée à une surface d'injection (6) et pouvant être positionné par rapport au tube à échantillon (7), comprenant également une unité centrale (9) permettant de mémoriser et de traiter des données de mesure correspondant aux amplitudes des ondes ultrasonores injectées ainsi qu'aux amplitudes des ondes ultrasonores détectées par le détecteur d'ultrasons (13), par une succession de positions du détecteur d'ultrasons (13) par rapport au tube à échantillon (7), **caractérisé en ce que** le détecteur d'ultrasons (13) peut être positionné à une distance par rapport à la surface d'injection (6) du tube à échantillon (7) se situant dans le champ proche des ondes ultrasonores s'étendant à partir de la zone d'injection (6) ponctuelle, **en ce que** l'émetteur d'ultrasons, (1) et le détecteur d'ultrasons (13) peuvent être positionnés indépendamment l'un de l'autre, le premier par rapport à la surface d'injection (6) en une pluralité de positions d'émission et le deuxième par rapport à la surface de détection (15) en plusieurs positions de réception pour chaque position d'émission, et **en ce que** l'on prévoit une unité de reconstitution (55) permettant de générer au moins une image des zones internes du tube à échantillon (7) à partir des amplitudes des ultrasons émis par l'émetteur d'ultrasons (1) en différentes positions d'émission et détectés par le détecteur d'ultrasons (13) en différentes positions de réception par rapport à chaque position d'émission.

2. Microscope à ultrasons selon la revendication 1, **caractérisé en ce que** le détecteur d'ultrasons (13) comporte un microscope à effet tunnel à pouvoir de résolution atomique.

3. Microscope à ultrasons selon la revendication 1, **caractérisé en ce que** le détecteur d'ultrasons (13) comporte un microscope à force atomique (12) à pouvoir de résolution atomique.

4. Microscope à ultrasons selon la revendication 3, **caractérisé en ce que** l'on prévoit une unité de détection optique (19,21,26,28,29,30) pour détecter les déviations de la pointe de réception (14) du microscope à force atomique (12).

5. Microscope à ultrasons selon l'une quelconque des revendications 1 à 4, **caractérisé en ce que** l'émetteur d'ultrasons (1) présente un transducteur d'ultrasons (3) à lentille arrière ultrasonore (4) de focalisation.

6. Microscope à ultrasons selon l'une quelconque des revendications 1 à 4, **caractérisé en ce que** l'émetteur d'ultrasons (1) comporte un microscope à force atomique (37) couplé à un transducteur d'ultrasons (41,42).

7. Microscope à ultrasons selon l'une quelconque des revendications 1 à 4, **caractérisé en ce que** l'émetteur d'ultrasons (1) comporte une source lumineuse (43), un modulateur (46) ainsi qu'un système optique de focalisation (49), permettant de focaliser un rayon lumineux (45) dont l'intensité est modulée sur le tube à échantillon (7).

8. Microscope à ultrasons selon l'une quelconque des revendications 1 à 7, **caractérisé en ce qu'**avec l'unité de reconstitution (55) on peut reconstruire l'image ou chaque image par un algorithme tomographique au moyen duquel les données mémorisées dans une mémoire (43) de l'unité centrale (9) peuvent être interconnectées de telle façon que des pixels situés dans une couche peuvent être restitués avec netteté.

9. Microscope à ultrasons selon l'une quelconque des revendications 1 à 8, **caractérisé en ce que** l'on prévoit un dispositif de déplacement du tube à échantillon permettant de déplacer un tube à échantillon (7) par rapport à l'émetteur d'ultrasons (1).
